# EUROPEAN PATENT SPECIFICATION

(11) **EP 1 026 426 B1**
(45) Date of publication and mention of the grant of the patent: **15.08.2007**
(21) Application number: 99830047.9
(22) Date of filing: 01.02.1999
(51) Int. Cl.: F16J 15/06, F16J 15/10

(54) **A face seal for sealing between flat elements in general and between half-calipers of a disk-brake caliper, in particular**
Dichtungsanordnung zwischen zwei flachen Elementen im allgemeinen und zwei Halbbremssätteln von einem Scheibenbremssattel im besonderen
Joint d'étanchéité entre deux éléments plats en général et entre deux demi-étriers d'étrier de frein à disque en particulier

(43) Date of publication of application: 09.08.2000
(73) Proprietor: Freni Brembo S.p.A., 24035 Curno (Bergamo) (IT)
(72) Inventor: Gotti, Giovanni, 24011 Alme' (Bergamo) (IT); Salvi, Gianmario, 24011 Alme' (Bergamo) (IT); Paravisi, Marco, 24044 Dalmine (Bergamo) (IT)
(74) Representative: Crippa, Paolo Ernesto

(56) References cited:
- EP-A- 0 597 819
- DE-A- 3 815 511
- FR-A- 2 685 050
- US-A- 5 716 051

## Description

The present invention relates to a face seal for sealing, in general, between two elements juxtaposed along respective flat surfaces and, in particular, between two half-calipers of a disk-brake caliper.

As is known (see for instance FR-A -4-2685050), face seals for sealing between elements juxtaposed along flat surfaces have been known for some time and substantially serve their purpose.

However, known seals have a recognized disadvantage which, up to now, has had to be accepted.

This disadvantage arises in particular during automated assembly of the elements, between an assembly station in which the face seals are associated with one of the elements and a subsequent station in which the two elements are juxtaposed, and consists of the fact that one of the face seals may adopt an incorrect position or may even leave its seat.

Clearly, when this occurs, the final product is not correctly assembled and displays a lack of sealing and leakage of fluid.

It is also clear that, if the juxtaposed elements were to go into operation without a seal, the operation of the elements and, in particular, braking efficiency, would be seriously compromised.

The problem upon which the present invention is based is that of devising a face seal of the type specified which has structural and functional characteristics such as to overcome the aforementioned disadvantage.

This problem is solved by a face seal of the type defined in claim 1. Preferred embodiments are disclosed in the dependent claims.

Further characteristics and the advantages of the seal according to the present invention will become clear from the following description of a preferred embodiment thereof, given by way of non-limiting example, with reference to the appended drawings, in which:
Figure 1 is an elevational view showing a seal according to the invention, in section and on an enlarged scale,
Figure 2 shows the seal of Figure 1, in section and in operation,
Figure 3 is an elevational view showing a variant of the seal according to the invention, in section and on an enlarged scale, and
Figure 4 shows the seal of Figure 3, in section and in operation.

With reference to the appended drawings, a face seal, generally indicated 1, is intended, in general, for providing a seal between two elements 2 and 3 which are juxtaposed along respective flat surfaces 4 and 5 having a common perpendicular axis X-X.

A duct 6 for a pressurized fluid extends through the surfaces 4 and 5. A portion of the duct 6, indicated 7, is formed in the element 2, whereas a portion of the duct 6, indicated 8, is formed in the element 3.

In particular, the two elements 2 and 3 are two half-calipers of a disk-brake caliper and the duct 6 is a duct for a pressurized braking fluid and extends between a master cylinder and a braking cylinder.

The face seal 1 comprises a circular sealing ring 9 of axis X-X, having a circular cross-section of diameter d. The sealing ring 9 as a whole is thus toroidal in shape.

The sealing ring 9 has an outer side 10 of diameter Dest, an inner side 11 of diameter Dint, and opposed faces 12 and 13 facing the two elements 2 and 3, respectively. In the embodiment shown, the diameter Dest is about 10 mm.

The face seal 1 also comprises a sleeve 14, of axis X-X, coaxial with the sealing ring 9. The sleeve 14 is connected to the sealing ring 9 by a coaxial, annular connecting region 15 of axis X-X formed integrally therewith. In other words, the sealing ring 9, the sleeve 14 and the connecting region 15 constitute a single part, preferably produced by moulding of a material suitable for seals, for example, a natural or synthetic elastomer.

The sleeve 14 has a cylindrical outer surface 16 the diameter A of which is substantially equal to the diameter Dint of the inner side 11 which, in the embodiment shown, is about 7 mm, and an inner cylindrical surface 17 having a diameter B which, in the embodiment shown, is about 5 mm.

The sleeve 14 projects coaxially from the sealing ring 9 and extends for a distance L from an end 18 disposed substantially at the level of the front face 13 to a free end 19. The free end 19 has a lead-in chamfer 20a. The connecting region 15 connects the inner side 11 of the sealing ring 9 to the end 18 of the sleeve. In order to alter the toroidal shape of the sealing ring as little as possible, the connecting region leaves an annular recess 20b.

Chamfers 20c and 20d are formed in the connecting region 15 and in the free end 19 of the sleeve 14, so that the seal 1 does not have sharp corners facing the duct 6.

The sealing ring 9 of the seal 1 is housed in a seat 21 formed in the face of the element 3, for example, by a spot-facing operation. The face seat 21 is centered on the axis X-X and has a suitable outside diameter larger than the diameter Dest of the outer side, and a suitable depth, less than the diameter d of the sealing ring, so as to ensure the necessary compression of the material of the sealing ring and hence the necessary seal when the surfaces 4 and 5 of the elements 2 and 3 are juxtaposed.

The sleeve 14 of the seal 1 is housed in a cylindrical hole 22 produced, for example, by a boring operation, in the same element in which the face seat 21 is formed, that is, in the element 3. The hole 22 is centered on the axis X-X, is coaxial with the face seat 21, and has a length no less than the length L of the sleeve 14 and a suitable diameter, smaller than the diameter A of the sleeve 14, so as to ensure that the sleeve is fitted into the hole with a predetermined force sufficient to prevent the seal from coming out of the element 3.

In other words, the sleeve 14 and the hole 22 are such as to enable the sleeve to be fitted in the hole like a plug. To ensure an adequate grip of the sleeve 14 inside the hole 22, the length L selected for the sleeve is between one quarter and one half of the diameter A of the sleeve and is preferably equal to about one third of the diameter A.

Finally, a predetermined effort is required to fit the seal 1 and an approximately equal effort would be required to remove it; undesirable detachment of the seal from the element during the handling and transportation of the element between one station of the automated assembly line and another is thus prevented. In other words, the seal remains firmly connected to the element in the correct position and remains restrained in the element so that it cannot be lost during the handling of the element.

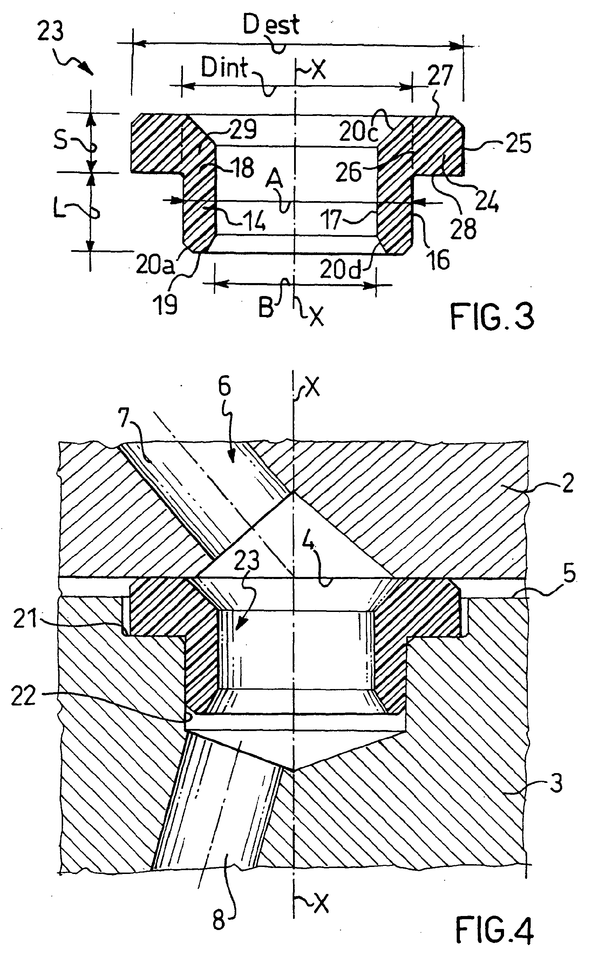

With reference to Figures 3 and 4, these show a seal 23 according to a variant of the invention.

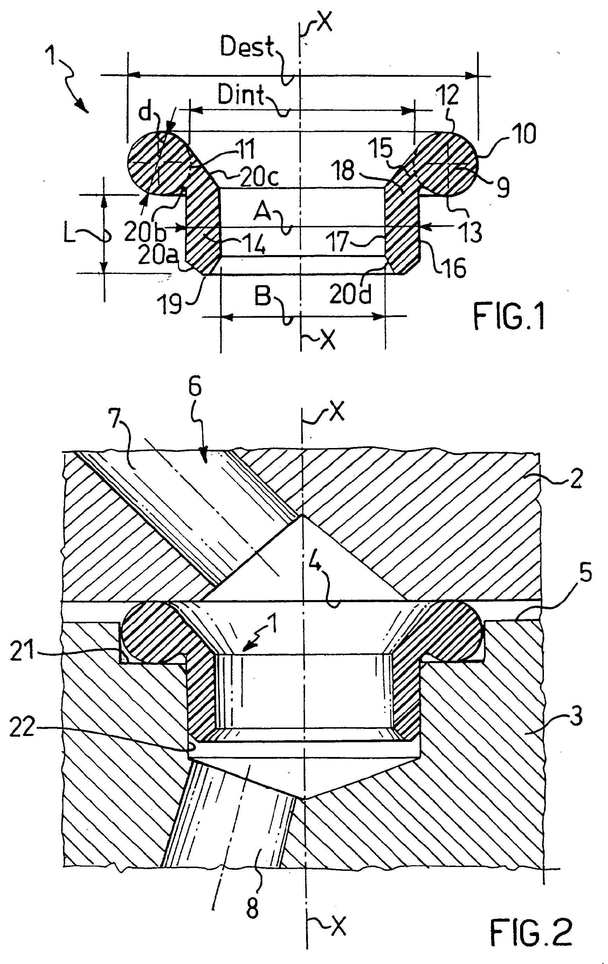

In Figures 3 and 4 the parts of the seal 23 which are structurally and functional identical to those of the seal 1 of Figures 1 and 2 retain the same reference numerals and, for brevity, are not described below.

The seal 23 comprises a sealing ring 24 which has a rectangular cross-section and has a cylindrical outer side 25, a cylindrical inner side 26, and opposed flat faces 27 and 28 facing the elements 2 and 3. The ring 24 has a thickness S and is connected to the sleeve 14 by means of a connecting region 29.

The main advantage achieved by the seal according to the present invention is that it has conferred an unusual degree of reliability on lines for assembling the elements and on the products produced by these lines. The seal according to the present invention in fact retains its correct position in the element in which it is housed during assembly and cannot leave the element.

As a further advantage, the seal according to the present invention is structurally simple and its production costs are therefore low.

A further advantage of the seal according to the present invention is that it is easy to fit.

Naturally, in order to satisfy contingent and specific requirements, an expert in the art may apply to the above-described seal many modifications and variations all of which, however, are included within the scope of protection of the invention as defined by the following claims.

## Claims

1. A face seal (I) for sealing between two half-calipers (2, 3) of a disk-brake caliper juxtaposed along respective flat surfaces (4, 5), wherein one of said half-calipers (3) is provided with a cylindrical hole (22) formed in said half-caliper (3),
said face seal (1) comprising
a sealing ring (9, 24) of predefined axis (X-X) having a inner side (11,26) having a predefined diameter (Dint),
a sleeve (14) of axis (X-X) coaxial with said sealing ring (9,24), said sleeve (14) projecting from said sealing ring (9,24) to a free end (19) with a predetermined length (L),
a connecting region (15,29) connecting said inner side (11,26) of the sealing ring (9,24) to an end (18) of the sleeve (14),
said sleeve (14) being suitable to be housed in said cylindrical hole (22) formed in said half-caliper (3)
**characterized in that**
said sleeve (14) has a cylindrical outer surface (16) with a diameter (A) equal to the diameter (Dint) of the inner side (11,26) of the sealing ring (9, 24),and
said sleeve (14) has an inner cylindrical surface (17) having a predefined diameter (B),
said free end (19) of said sleeve (14) has an external lead-in chamfer (20a) and an internal chamfer (20d)
said sleeve (14) having a further chamfer (20c) formed in the connecting region (15,29),
said sleeve being fittable like a plug in the cylindrical hole (22) formed in said half-caliper (3).

2. A face seal (1) according to Claim 1, wherein the sleeve (14) projects coaxially from said sealing ring (9, 24).

3. A face seal (1) according to Claim 1 or 2, wherein the sealing ring (9) is toroidal in shape.

4. A face seal (1) according to Claim 1 or 2, wherein the sealing ring (24) has a rectangular cross-section.

5. A face seal (1) according to claim 1, wherein said length (L) is selected for the sleeve (14) to be between one quarter and one half of said diameter (A) and preferably equal to about one third of the diameter (A), to keep said sleeve (14) restrained and gripped inside said hole (22).

6. A disk brake caliper comprising two half-calipers (2, 3), said half-calipers (2, 3) comprising juxtaposed flat surfaces (4, 5) having a common perpendicular axis (X-X), said half-calipers (2, 3) comprising a duct (6) for a pressurised fluid extending through the surfaces (4, 5) to connect a master cylinder to a braking cylinder, wherein a portion (7) of the duct (6) is formed in the first half-caliper (2), and a portion (8) of the duct (6) is formed in the second half-caliper (3), wherein one of said half-calipers (3) is provided with a cylindrical hole (22) formed in said half-caliper (3),
said disk brake caliper further comprising a face seal (1) according to any one of the claims 1 - 6 for sealing the juxtaposed surfaces (4, 5) for fluidically connect said two duct portions (7, 8).

7. A caliper according to claim 6, wherein said sleeve (14) has a diameter (A) of the outer surface (16) greater than a diameter the cylindrical hole (22) formed in said half-caliper (3), for ensuring that said sleeve (14) is fitted into said hole (22) with a predetermined force sufficient to prevent said seal (1) from coming out of said half-caliper (3).

8. A caliper according to claim 6, wherein said outer surface (16) of said sleeve (14) grips inside said hole (22) preventing from undesirable detachment of said seal (1) from said half-caliper (3) so as the seal remains firmly connected to the half-caliper in the correct position.

9. A caliper according to claim 6, wherein the face seal (1) comprises a coaxial annular connecting region (15) of predefined axis (X-X) connecting the sealing ring (9) with the sleeve (14).

10. A caliper according to claim 9, wherein said sealing ring (9), said sleeve (14) and said connecting region (15) constitute a single part.

11. A caliper according to claim 6, wherein the sealing ring (9) is toroidal in shape and an annular recess (20b) is provided in the connecting region (15) in order to alter the toroidal shape of the sealing ring (9) as little as possible.

## Patentansprüche

1. Gleitringdichtung (1) zur Abdichtung zwischen zwei Sattelhälften (2, 3) eines Scheibenbremsensattels, die längs entsprechender flacher Oberflächen (4, 5) angrenzend angeordnet sind, wobei eine der Sattelhälften (3) mit einem zylindrischen Loch (22) versehen ist, das in der Sattelhälfte (3) ausgebildet ist,
wobei die Gleitringdichtung (1) umfasst:
einen Dichtungsring (9, 24) mit vordefinierter Achse (X-X), der eine Innenseite (11, 26) mit einem vordefinierten Durchmesser (Dint) aufweist,
eine Hülse (14) mit einer Achse (X-X) koaxial mit dem Dichtungsring (9, 24), wobei die Hülse (14) vom Dichtungsring (9, 24) bis zu einem freien Ende (19) mit einer vorgegebenen Länge (L) hervorsteht,
einen Verbindungsbereich (15, 29), der die Innenseite (11, 26) des Dichtungsrings (9, 24) mit einem Ende (18) der Hülse (14) verbindet,
wobei die Hülse (14) dafür geeignet ist, in dem in der Sattelhälfte (3) ausgebildeten zylindrischen Loch (22) aufgenommen zu werden,
**dadurch gekennzeichnet, dass**
die Hülse (14) eine zylindrische Außenoberfläche (16) mit einem Durchmesser (A) gleich dem Durchmesser (Dint) der Innenseite (11, 26) des Dichtungsrings (9, 24) aufweist, und
die Hülse (14) eine innere zylindrische Oberfläche (17) mit einem vordefinierten Durchmesser (B) aufweist,
das freie Ende (19) der Hülse (14) eine externe Einführungsabschrägung (20a) und eine innere Abschrägung (20d) aufweist,
die Hülse (14) eine weitere Abschrägung (20c) aufweist, die im Verbindungsbereich (15, 29) ausgebildet ist,
die Hülse ähnlich einem Pfropfen in das in der Sattelhälfte (3) ausgebildete zylindrische Loch (2) einsetzbar ist.

2. Gleitringdichtung (1) nach Anspruch 1, wobei die Hülse (14) koaxial vom Dichtungsring (9, 24) hervorsteht.

3. Gleitringdichtung (1) nach Anspruch 1 oder 2, wobei der Dichtungsring (9) eine Toroidform aufweist.

4. Gleitringdichtung (1) nach Anspruch 1 oder 2, wobei der Dichtungsring (24) einen rechtwinkligen Querschnitt aufweist.

5. Gleitringdichtung (1) nach Anspruch 1, wobei die Länge (L) für die Hülse (14) so gewählt ist, dass sie zwischen einem Viertel und einer Hälfte des Durchmessers (A) und vorzugsweise gleich etwa einem Drittel des Durchmessers (A) beträgt, um die Hülse (14) innerhalb des Loches (22) zurückzuhalten und in Eingriff zu halten.

6. Scheibenbremsensattel, der zwei Sattelhälften (2, 3) umfasst, wobei die Sattelhälften (2, 3) anliegende flache Oberflächen (4, 5) mit einer gemeinsamen senkrechten Achse (X-X) umfassen, wobei die Sattelhälften (2, 3) einen Kanal (6) für ein unter Druck stehendes Fluid umfassen, der sich durch die Oberflächen (4, 5) erstreckt, um einen Hauptzylinder mit einem Bremszylinder zu verbinden, wobei ein Abschnitt (7) des Kanals (6) in der ersten Sattelhälfte (2) ausgebildet ist und ein Abschnitt (8) des Kanals (6) in der zweiten Sattelhälfte (3) ausgebildet ist, wobei eine der Sattelhälften (3) mit einem in der Sattelhälfte (3) ausgebildeten zylindrischen Loch versehen ist, und wobei der Bremsscheibensattel ferner eine Gleitringdichtung (1) nach irgendeinem der Ansprüche 1-6 umfasst, um die anliegenden Oberflächen (4, 5) für eine Fluidverbindung der zwei Kanalabschnitte (7, 8) abzudichten.

7. Sattel nach Anspruch 6, wobei die Hülse (14) einen Durchmesser (A) der Außenoberfläche (16) größer als ein Durchmesser des in der Sattelhälfte (3) ausgebildeten zylindrischen Loches (22) aufweist, um sicherzustellen, dass die Hülse (14) mit einer vorgegebenen Kraft in das Loch (22) eingesetzt ist, die ausreicht, um die Dichtung (1) an einem Herausfallen aus der Sattelhälfte (3) zu hindern.

8. Sattel nach Anspruch 6, wobei die Außenoberfläche (16) der Hülse (14) innerhalb des Loches (22) in Eingriff gelangt, wodurch ein unbeabsichtigtes Lösen der Dichtung (1) von der Sattelhälfte (3) verhindert wird, so dass die Dichtung mit der Sattelhälfte in der richtigen Position fest verbunden bleibt.

9. Sattel nach Anspruch 6, wobei die Gleitringdichtung (1) einen koaxialen ringförmigen Verbindungsbereich (15) mit einer vordefinierten Achse (X-X) umfasst, der den Dichtungsring (9) mit der Hülse (14) verbindet.

10. Sattel nach Anspruch 9, wobei der Dichtungsring (9), die Hülse (14) und der Verbindungsbereich (15) ein einziges Teil bilden.

11. Sattel nach Anspruch 6, wobei der Dichtungsring (9) eine Toroidform aufweist und eine ringförmige Aussparung (20b) im Verbindungsbereich (15) vorgesehen ist, um die Toroidform des Dichtungsrings (9) möglichst wenig zu ändern.

## Revendications

1. Joint facial (1) destiné à établir une étanchéité entre deux demi-étriers (2, 3) d'un étrier en forme de disque juxtaposé le long de surfaces plates (4, 5) respectives, dans lequel un desdits demi-étriers (3) est pourvu d'un trou cylindrique (22) formé dans ledit demi-étrier (3),
ledit joint facial (1) comprenant
une bague d'étanchéité (9, 24) d'un axe prédéfini (X-X) présentant un côté interne (11, 26) possédant un diamètre prédéfini (Dint),
un manchon (14) d'un axe (X-X) coaxial à ladite bague d'étanchéité (9, 24), ledit manchon (14) se projetant de ladite bague d'étanchéité (9, 24) à une extrémité libre (18) avec une longueur prédéterminée (L),
une zone de raccordement (15, 29) raccordant ledit côté interne (11, 26) de la bague d'étanchéité (9, 24) à une extrémité (18) du manchon (14),
ledit manchon (14) convenant pour être logé dans ledit trou cylindrique (22) formé dans ledit demi-étrier (3)
**caractérisé en ce que**
ledit manchon (14) présente une surface externe cylindrique (16) dotée d'un diamètre (A) égal au diamètre (Dint) du côté interne (11, 26) de la bague d'étanchéité (9, 24), et
ledit manchon (14) présente une surface cylindrique interne (17) possédant un diamètre prédéfini (B),
ladite extrémité libre (19) dudit manchon (14) présente un chanfrein d'entrée externe (20a) et un chanfrein interne (20d),
ledit manchon (14) présentant un autre chanfrein (20c) formé dans la zone de raccordement (15, 29),
ledit manchon pouvant être monté comme une fiche dans le trou cylindrique (22) formé dans ledit demi-étrier (3).

2. Joint facial (1) selon la revendication 1, dans lequel le manchon (14) se projette de manière coaxiale depuis ladite bague d'étanchéité (9, 24).

3. Joint facial (1) selon la revendication 1 ou 2, dans lequel la bague d'étanchéité (9) est de forme toroïdale.

4. Joint facial (1) selon la revendication 1 ou 2, dans lequel la bague d'étanchéité (24) présente une section transversale rectangulaire.

5. Joint facial (1) selon la revendication 1, dans lequel ladite longueur (L) est sélectionnée pour que le manchon (14) mesure entre un quart et la moitié dudit diamètre (A) et soit de préférence égal à environ un tiers du diamètre (A), pour retenir ledit manchon (14) et le coincer à l'intérieur dudit trou (22).

6. Etrier de frein à disque comprenant deux demi-étriers (2, 3), lesdits demi-étriers (2, 3) comprenant des surfaces plates juxtaposées (4, 5) présentant un axe perpendiculaire commun (X-X), lesdits demi-étriers (2, 3) comprenant un conduit (6) pour un fluide sous pression s'étendant à travers les surfaces (4, 5) pour raccorder un maître-cylindre à un cylindre de freinage, dans lequel une partie (7) du conduit (6) est formée dans le premier demi-étrier (2), et une partie (8) du conduit (6) est formée dans le second demi-étrier (3), dans lequel un desdits demi-étriers (3) est pourvu d'un trou cylindrique (22) formé dans ledit demi-étrier (3),
ledit étrier de frein de disque comprenant en outre un joint facial (1) selon l'une quelconque des revendications 1 à 6 destiné à étanchéifier les surfaces juxtaposées (4, 5) pour raccorder fluidiquement lesdites deux parties de conduit (7, 8) .

7. Etrier selon la revendication 6, dans lequel ledit manchon (14) présente un diamètre (A) de la surface externe (16) supérieur à un diamètre du trou cylindrique (22) formé dans ledit demi-étrier (3), pour garantir que ledit manchon (14) soit monté à l'intérieur dudit trou (22) avec une force prédéterminée suffisante pour empêcher ledit joint (1) de sortir dudit demi-étrier (3).

8. Etrier selon la revendication 6, dans lequel ladite surface externe (16) dudit manchon (14) se coince à l'intérieur dudit trou (22) empêchant le détachement indésirable dudit joint (1) depuis ledit demi-étrier (3) de sorte que le joint reste fermement raccordé au demi-étrier dans la position correcte.

9. Etrier selon la revendication 6, dans lequel le joint facial (1) comprend une zone de raccordement annulaire coaxiale (15) d'un axe prédéfini (X-X) raccordant la bague d'étanchéité (9) au manchon (14).

10. Etrier selon la revendication 9, dans lequel ladite bague d'étanchéité (9), ledit manchon (14) et ladite zone de raccordement (15) constituent une seule partie.

11. Etrier selon la revendication 6, dans lequel la bague d'étanchéité (9) est de forme toroïdale et un évidement annulaire (20b) est prévu dans la zone de raccordement (15) afin de modifier le moins possible la forme toroïdale de la bague d'étanchéité (9).
